# EUROPEAN PATENT SPECIFICATION

(11) **EP 4 523 111 B1**
(45) Date of publication and mention of the grant of the patent: **11.03.2026**
(21) Application number: 23736585.3
(22) Date of filing: 14.06.2023
(51) Int. Cl.: G06F 21/55, H04L 9/40, G06N 3/084, G06N 3/09

(54) **DETECTION OF MALICIOUS ACTIVITY**
ERKENNUNG VON BÖSARTIGER AKTIVITÄT
DÉTECTION D'ACTIVITÉ MALVEILLANTE

(30) Priority: 15.06.2022 LU 502287
(43) Date of publication of application: 19.03.2025
(73) Proprietor: Microsoft Technology Licensing, LLC, Redmond, WA 98052-6399 (US)
(72) Inventor: BEN AMI, Amir, Redmond, Washington 98052 (US); RIMON, Amos Avraham, Redmond, Washington 98052 (US); BRUSILOVSKY, Idan, Redmond, Washington 98052 (US); POLEG, Danielle, Redmond, Washington 98052 (US)
(74) Representative: CMS Cameron McKenna Nabarro Olswang LLP
(86) International application number: PCT/US2023/068425
(87) International publication number: WO 2023/245052

(56) References cited:
- YUKYUNG LEE ET AL: "LAnoBERT : System Log Anomaly Detection based on BERT Masked Language Model", ARXIV.ORG, CORNELL UNIVERSITY LIBRARY, 201 OLIN LIBRARY CORNELL UNIVERSITY ITHACA, NY 14853, 18 November 2021 (2021-11-18), XP091100398
- CATILLO MARTA ET AL: "AutoLog: Anomaly detection by deep autoencoding of system logs", EXPERT SYSTEMS WITH APPLICATIONS, ELSEVIER, AMSTERDAM, NL, vol. 191, 10 December 2021 (2021-12-10), XP086924337, ISSN: 0957-4174, [retrieved on 20211210], DOI: 10.1016/J.ESWA.2021.116263

## Description

### BACKGROUND

Cloud networks and applications enable private users and/or enterprises to utilize remote computing resources to store large amounts of data or perform demanding computational tasks. As the data and software is stored on a remote server accessed over publicly accessible networks, cloud systems are a common target for malicious activity such as cyber-attacks.

The embodiments described below are not limited to implementations which solve any or all of the disadvantages of known methods of detecting cyber-attacks.

YUKYUNG LEE ET AL: "LAnoBERT : System Log Anomaly Detection based on BERT Masked Language Model", ARXIV.ORG, CORNELL UNIVERSITY LIBRARY, 201 OLIN LIBRARY CORNELL UNIVERSITY ITHACA, NY 14853, 18 November 2021, describes LAnoBERT, a parser free system log anomaly detection method that uses the BERT model. The method, LAnoBERT, learns the model through masked language modeling, which is a BERT-based pre-training method, and proceeds with unsupervised learning-based anomaly detection using the masked language modeling loss function per log key word during the inference process.

### SUMMARY

The invention is set out in the appended set of claims.

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

The independent claims define a method, system and computer-readable storage medium for detecting malicious activity on cloud applications. Further embodiments are defined in the dependent claims.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a flow diagram of a method for detecting malicious activity (e.g. cyber-attacks) on cloud applications;
FIG. 2 is a flow diagram of a method for training a machine learning model for use in the detection of malicious activity (e.g. cyber-attacks) on cloud applications;
FIG. 3 is schematic diagram of a system configured to detect malicious activity (e.g. cyber-attacks) on cloud applications;
FIG. 4 is a schematic diagram of a first example machine learning model for use in the detection of malicious activity (e.g. cyber-attacks) on cloud applications;
FIG. 5 is a schematic diagram of a second example machine learning model for use in the detection of malicious activity (e.g. cyber-attacks) on cloud applications;
FIG. 6 is a flow diagram of another method for detecting malicious activity (e.g. cyber-attacks) on cloud applications which is a variation on that shown in FIG. 1; and
FIG. 7 is a flow diagram showing a filtering operation from the method of FIG. 6 in more detail.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

Although the present examples are described and illustrated herein as being implemented in a computer system, the system described is provided as an example and not a limitation. As those skilled in the art will appreciate, the present examples are suitable for application in a variety of different types of computer systems.

As described above, cloud systems are a common target for malicious activity such as cyber-attacks. A cyber-attack may, for example, involve any of the following activities: disrupting an enterprise's network, stealing (or otherwise misusing) private data, destroying data, altering data or implementing ransom software. A cyber-attack may originate from within an organization or external to the organization.

Anomalous activities (or events) serve as indicators for potential cyber-attacks that a cyber-attack detection system may use to prevent malicious activity on a cloud application. For a cyber-attack detection system to be successful it is desirable that it can respond to threats rapidly such that any malicious or suspicious activity (e.g. any potential cyber-attack) can be blocked or identified before data breaches or major disruption is caused. Considering the large volume of events taking place on cloud applications the cyber-attack detection system may have to process in excess of tens of billions of events per day. Therefore, it is a requirement of the system to be able to handle this large amount of data in an, ideally, unsupervised manner.

The term 'event on a cloud application' is used herein to refer to an interaction with an application that is running on a remote server or otherwise using remote resources (e.g. remote memory), for example a user interaction or an external program interaction (e.g., an API interaction). An example of an event on a cloud application is a user accessing a video streaming service using a browser and via a particular internet service provider (ISP) or using a particular browser (user-agent).

It is also desirable that the cyber-attack detection system is robust enough such that malicious attackers cannot easily find a loophole such that they may access the cloud application undetected.

It is also desirable that the cyber-attack detection system does not raise false alarms as an overzealous system may prevent authorized user's from accessing cloud applications or their personal data. Furthermore, false alarms may also reduce confidence in the system.

It is also desirable for the cyber-attack detection system to be adaptive such that it can change to changes in user or organization preferences or configurations. For example, the threat detection system would not be effective if it raised alarms following an entire organization switching to a different internet service provider to access cloud applications.

It is also desirable for the cyber-attack detection system to not have to rely on a substantial memory database of user's or organization's historical activity data to ascertain whether an anomalous activity is taking place. As well as using up significant memory resources, it is also computationally expensive for the system to use a look up table to collect user information on every occasion a user uses the cloud application.

It is also desirable for the cyber-attack detection system to not require a plurality of anomalous events to trigger an alert. For example, a system may detect 'bursts' of activity in terms of temporal spikes. A preferred system would only rely on one anomalous event to respond thus decreasing the response time to an attack.

Described herein are methods and systems for detecting potential threats to the integrity of a cloud application. Such threats may include malicious activities such as cyber-attacks and other suspicious activities. As described in more detail below, the methods and systems described herein provide some or all of the desirable attributes of a cyber-attack detection system (which may alternatively be referred to as a malicious activity detection system) described above. The method involves inputting a log of an event on a cloud application, with the value of an attribute in the log masked, into a trained machine learning model. The log comprises a plurality of values of attributes of the event (e.g. in the form of name-value pairs or a series of values corresponding to different attributes in a predefined sequence or arrangement). Referring to the earlier example of an event being a user accessing a video streaming service using a browser and via a particular ISP, the attributes included in the log of the event may comprise one or more of: the user's identity (e.g. their user ID), the ISP, the nature of the activity (e.g. accessing the particular video streaming service), the user agent (e.g. the particular browser that was used), the time of the event (e.g. 10am), the geographical origin of the activity (e.g. country of origin) and the duration of the activity (e.g. 90 minutes). Any attribute may be masked, for example the ISP may be masked.

As described below, whilst the methods and systems are described herein in the context of detecting threats to the integrity of a cloud application, they may in addition, or instead, be used to detect threats to the integrity of an operating system and/or on-premise application.

The trained machine learning model generates a distribution of probabilities for the candidate (i.e. potential) values of the masked value (which may also be referred to as the 'masked attribute' as it is a value that corresponds to an attribute of the event) and then makes a determination as to whether the event is an anomalous event (e.g. whether an anomalous event has occurred) using the known value of the masked value (i.e. the actual value of the attribute before it was masked) and the distribution of probabilities (e.g. by extracting, from the distribution of probabilities, the probability of the masked value corresponding to an attribute having the known value of that attribute and comparing the extracted probability to a predefined threshold or otherwise analyzing the extracted probability). For example, if there are 10 different ISPs that could have been used, values identifying each of these 10 different ISPs are the candidate values of the masked value (where the corresponding attribute is the ISP) and the distribution of probabilities comprises a probability for each of the candidate values (i.e. a probability for each of the 10 options for the ISP). The probabilities may be provided in any form, such as negative log likelihoods or percentages.

Using machine learning for cyber-attack detection is technically challenging because of the lack of labelled training data for use in supervised training. The trained machine learning model described herein is trained without requiring any human labelling or external labels, but by extracting the labels from the data itself. As a result, the training process may be referred to as "self-supervised learning' (as opposed to either supervised or unsupervised learning). The trained machine learning model described herein may be a neural network model. As described in more detail below, data comprising a plurality of logs of events is received and the training data is generated by masking a value that corresponds to an attribute in each log (e.g. the same attribute or a selected attribute). Value masking may take place using standard masking mechanisms such as multiplying the value of an attribute by zero (e.g. if the log comprises four values A, B, C, D, corresponding to four different attributes, if the second attribute / value is masked, the masked log comprises four values A, 0, C, D). The resultant plurality of masked logs (each masked log comprising a log of an event in which a value of an attribute in the log is masked) are input into the machine learning model. The machine learning model generates, from a masked log (e.g. for each of the masked logs), a distribution of probabilities for candidate (e.g. possible) values of the masked value. The generated distribution of probabilities for the candidate values are compared to the known value (i.e. the actual value in the log of the attribute before it was masked) and the machine learning model is updated based on the comparison (e.g. using back propagation in the neural network and where the determined probability for the known value is used in calculating the cross-entropy loss). This is repeated for a plurality of masked logs (e.g. for each of the masked logs in the training data). The training therefore enables the trained machine learning model to generate more refined probability distributions after each iteration of training.

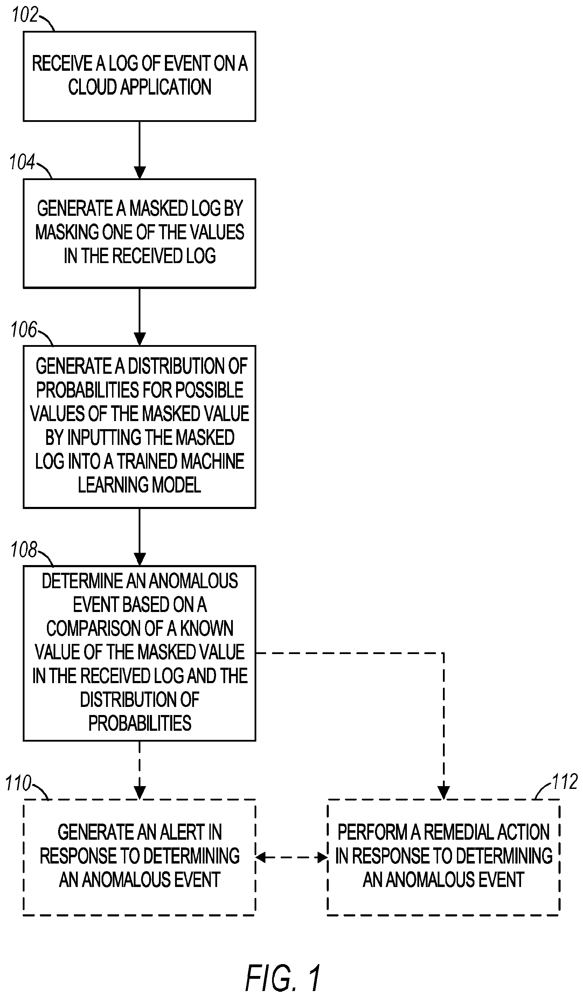

FIG. 1 is a flow diagram of a method of detecting malicious activity on cloud applications. A log of an event on a cloud application is received (block 102). As noted above, the log comprises a plurality of values, each value corresponding to one of a plurality of attributes which describe characteristics and/or metrics of the events in the logs. For example, one attribute (and hence one value in the log) may identify the ISP which was used during the event. In additional examples, the attributes also define any one of, but are not limited to, a user ID associated with whoever performed the activity in the event, a type of activity (e.g., request to download a file, edit a file, move a file), a date and time at which an activity commenced or an organization ID with which the user is associated. Each value of an attribute of an event may be expressed as a number, based on a dictionary (e.g. a look-up table) that maps candidate values (which may be in the form of strings) to numbers, such that the log of the event is represented as a vector. It will be appreciated that for different attributes there may be different numbers of candidate values (e.g. there may only be a small number of candidate values for the attribute "ISP" and there may be a large number of candidate values for the attribute 'user ID').

A masked log is generated by masking one of the values of the attributes in the received log (block 104). The values corresponding to the same attribute may be masked in all received logs (e.g. the value of the ISP attribute may always be masked). In other examples, the attribute which has the corresponding value masked is selected by an operator of the cyber-attack detection system or the tenant organization or may be selected based on other criteria or selected substantially at random.

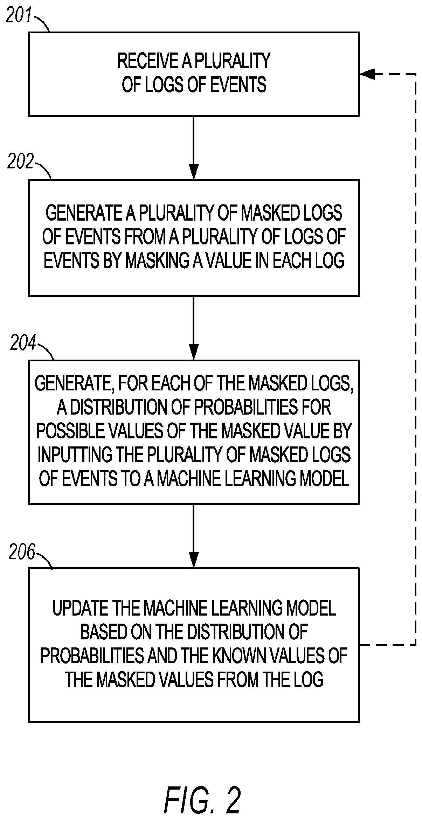

A distribution of probabilities for the candidate values of the masked attribute (block 106) is generated by inputting the masked log into a trained machine learning model. As described above and below, the trained machine learned model is trained using a plurality of masked logs of events. The distribution of probabilities indicate, for each potential (i.e. candidate) value of the masked value, the likelihood that the particular value is included in the log entry based on the values of the other (unmasked) attributes in the log entry. For example, where the masked value corresponds to the attribute that is the ISP, the candidate values are representations of the possible ISPs with which an activity in an event could have been performed and the distributions of probabilities indicate the probability that each of the possible ISPs was used and hence also indicates which of the ISPs is most likely to be used during the activity. It will be appreciated that there may be a single most likely ISP or there may be more than one ISP that has a high probability of having been used (e.g. where more than one ISP has been used previously for a similar or identical activity in similar or identical circumstances, as captured in one of the logs used for training). Further detail regarding the training of the trained machine learning model is described later in relation to FIG. 2. It will be appreciated that the training of the model may be implemented by a different entity to that which implements FIG. 1, or the same entity may perform the training (as shown in FIG. 2) and the inference (as shown in FIG. 1).

A determination is made that the event is an anomalous event by comparing the known value of the masked value in the received log with the distribution of probabilities generated for the values of the masked value (block 108). The comparison may be made using a predefined threshold, whereby if the probability, from the distribution of probabilities, for the known value of the masked value falls above or below the threshold (dependent upon the nature of the probability used), then the event is deemed anomalous. Where the probability is expressed as a percentage, then the comparison may identify an anomalous event if the percentage falls below a threshold and where the probability is expressed as a negative log likelihood, then the comparison may identify an anomalous event if the percentage exceeds a threshold.

Where a threshold is used (in block 108), the threshold may be fixed or it may be updated periodically or on an ad hoc basis (e.g. based on an update trigger event, such as a high rate of false positives). For example, the threshold may be updated periodically based on a number of detected anomalous events in a preceding time period (e.g. the number of detected anomalous events in the previous day or the previous 24 hour period). By using an adaptive threshold (i.e. a threshold that is not fixed but is updated based on data generated by the method of FIG. 1), the method of FIG. 1 is more flexible and can adapt to changes in circumstances (e.g. to reduce a number of false positives).

Blocks 110 and 112 are displayed as optional operations and neither, one or both may be performed. In block 110 an alert is generated in response to determining that the event is an anomalous event. The alert may be used to bring an anomalous event to the attention of the owner of the data concerned or an administrator for the cloud application, or otherwise to log the detection of an anomalous event.

In block 112 a remedial action is automatically performed in response to determining an anomalous event. An example of a remedial action is to block the access to the cloud application for the user responsible for the event or to block access to the particular cloud application for a period of time (e.g. while other investigation is performed). Another example of a remedial action is to surface the data to allow the owner of the data or the administrator for the cloud application to investigate the anomalous event.

FIG. 2 is a flow diagram describing the training of the machine learning model utilized in FIG. 1. A plurality of masked logs of events are generated from a plurality of logs of events (in block 202, with the plurality of logs of events received at block 201). The plurality of masked logs are generated by masking a value in each of the logs of events in the plurality of logs of events. When generating the plurality of masked logs, the value corresponding to the same attribute may be masked in all the logs (i.e. the same attribute that corresponds to the value that is masked at the inference stage using the method of FIG. 1) or the value that is masked (or the corresponding attribute) may be selected systematically or randomly (e.g. such that in at least some of the training data, the value corresponding to the same attribute is masked as at the inference stage using the method of FIG. 1). By using training data in which values corresponding to different attributes are masked in some of the logs, values of any of these different attributes may be masked at the inference stage when using the method of FIG. 1. For example, where in training, values corresponding to a first attribute are masked when generating some of the plurality of masked logs of events and values corresponding to a second attribute are masked when generating others of the plurality of masked logs of events, either the value corresponding to the first attribute or the value corresponding to the second attribute may be masked at the inference stage when using the trained machine learning model in the method of FIG. 1.

The plurality of logs of events (as received in block 201) may be collected from past (e.g. historical) events associated with the cloud application. For example, the plurality of logs of events may comprise all events over a preceding time period, such as a week. The plurality of logs of events that are received (in block 201) and used to generated masked logs for training (in block 202) may be limited in some way, for example such that they correspond to activities performed by a particular tenant (e.g., an individual user or an individual organization) and as a result, the trained machine learning model generated using the method of FIG. 2 is tailored for that particular tenant. This means that the detection of anomalous events will likely be more accurate for that particular tenant, rather than other tenants, unless the general behavior of both tenants is similar. In various examples, separate machine learning models may be trained for different tenants (using the method of FIG. 2) and used by those different tenants to detect cyber-attacks (using the method of FIG. 1). Alternatively, the log of events that is received (in block 201) and used to generate masked logs for training (in block 202) are associated with activities performed by a plurality of tenants (e.g. two or more tenants).

A distribution of probabilities for possible (i.e. candidate) values of the masked value are generated by inputting the plurality of masked logs of events into a machine learning model (block 204). As described above, the probabilities represent the likelihood of the different possible values of an attribute based on the values of the values of the other attributes in the event. For example, the distribution of probabilities may define the probability of each of the possible values for the ISP occurring in the log (i.e., the likelihood each ISP was used in the particular event to which the log relates) based on the values for the user ID, the organization ID and activity type (where ISP, user ID, organization ID and activity type are attributes).

The machine learning model is updated based on the distribution of probabilities generated (in block 206) from a masked log and a corresponding known value of the masked value from the original, unmasked log (as received in block 201) from which the masked log was generated (in block 202). This operation (in block 206) may involve back propagation of the training results and the probability, from the distribution of probabilities, corresponding to the known value of the masked value may be used as a cross-entropy loss. One or more of the other probabilities, from the distribution of probabilities, may also be used in the back propagation. The comparison of the probabilities for each candidate value of a masked value and the known value of the masked attribute provides a way of assessing the accuracy of the generated predictions (i.e. the accuracy of the generated distribution of probabilities). Depending upon the nature of the event captured in a log, it may be that there is more than one candidate value of a masked value that has a high probability of occurring (e.g. where a user regularly uses one of two different browsers to access a particular streaming service there may be high probabilities of values corresponding to both of these browsers). Repeating this process for each of the plurality of logs of events (as received in block 201) incrementally improves the machine learning model's ability to accurately predict the value of the masked value, based on the values of the other attributes in an event.

The method of FIG. 2 is used to initially train a machine learning model for use in the method of FIG. 1 and that model may remain unchanged. Alternatively, the method of FIG. 2 may be used to periodically refine the trained machine learning model, as indicated by the dotted arrow between blocks 206 and 201. In such an example, a new plurality of logs are received (in block 201) and used to generate a new plurality of masked logs of events (in block 202) which are input into the machine learning model (in block 204) to enable the updating of the machine learning model (in block 206). The new plurality of logs that are received (in block 201) and used (in block 202) may comprise a log of events that have occurred in a previous time period (e.g. the previous day or 24 hour period) or that have occurred since the previous training / re-training of the model (in a previous iteration of the method of FIG. 2).

The methods illustrated in FIG. 1 and FIG. 2 provide a plurality of desirable characteristics for detecting malicious activity on cloud applications. Firstly, the method in FIG. 1 enables large numbers of events to be processed quickly in an efficient manner by inputting the logs of the events into the trained machine learning model. Unlike a rules-based approach, there is no need to compare a log of an event to a corpus of historic data (which might be user-specific) accessed from memory in order to assess whether the event is anomalous or not. The methods described herein do not require large amounts of storage for the historic data as it is used in training the machine learning model only (in FIG. 2) and not in the inference stage (in FIG. 1). In other words, historic knowledge (e.g. correlations between the values of different attributes) is inherently reflected in the trained machine learning model and need no longer be accessed explicitly in the inference stage.

The use of a machine learning model, as described herein, provides a robust method which is not easy for an attacker to work around and perform malicious activities whilst being undetected. The method of FIG. 1 achieves this because the trained machine learning model is configured to produce a probability distribution for the value of a masked value based on the other values in the log of the event (where these other values are values corresponding to other attributes, different from the attribute that corresponds to the masked value) as opposed to comparing values of attributes directly to common values of the same attributes in previous historical events. Basing a cyber-attack detection system on direct comparisons to historical events means it may be easy for an attacker to pose as an authorized user by mimicking an authorized user or by operating with different attributes under a user ID over an extended period of time such that the system adapts to accept the new values of the attributes as the norm, leaving the cloud application open for a cyber-attack. For example, the attacker may perform minor low risk activities using a different ISP or IP address for a month, leading the system to believe this is normal behavior, before a cyber-attack is attempted using the different ISP or IP address. Furthermore, it is more difficult for an attacker to reverse engineer a cyber-attack detection system which is based on a trained machine learning model which has had its parameters set by processing a plurality of masked logs of events, compared to a rule-based approach.

The method described above with reference to FIG. 1 provides a detection system which reduces the number of erroneous anomalous events being identified (compared to rule-based approaches), thus reducing the number of false alarms being raised and preventing authorized users from being regularly locked out of the cloud application. As the trained machine learned model generates a probability distribution for each possible value of a masked value, some values of attributes (which may not be very common in previous events) may still have relatively high probabilities due to the influence of the values of other attributes in the event. Therefore, in the example of a user having to change their ISP (due to the ISP needing to be updated for example), if they select an alternative to their usual ISP, the trained machine learning model may indicate that the alternative ISP is a likely choice for a user performing a particular activity during a particular part of the day and thus not indicate the event as anomalous.

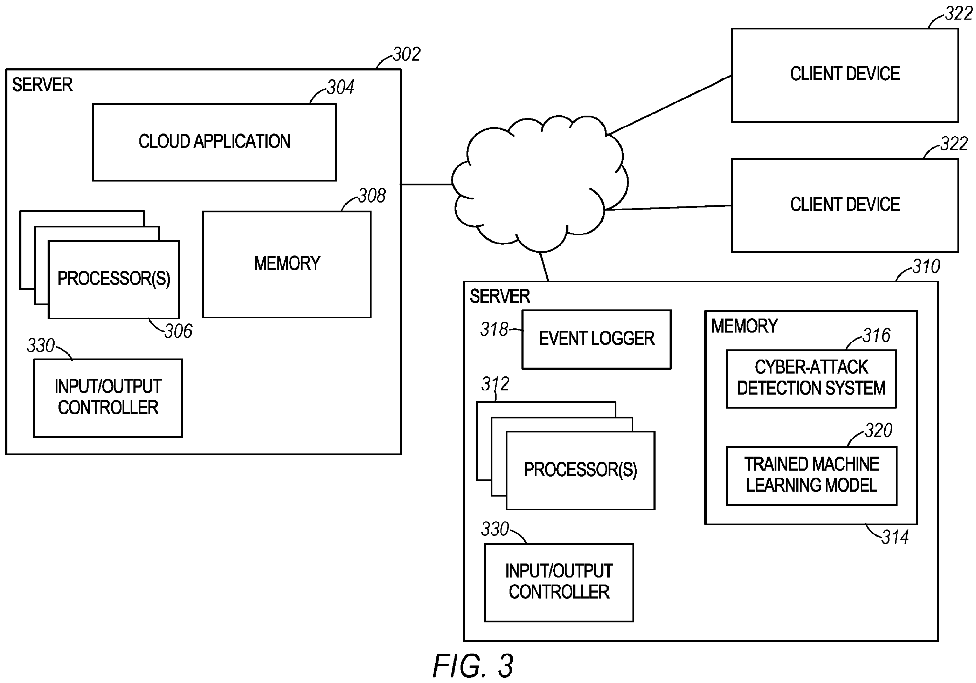

FIG. 3 shows an illustration of a system which may perform the methods illustrated in FIG. 1 and FIG. 2 and facilitate the detection of cyber-attacks on cloud applications. The system comprises a first server 302 which hosts a cloud application and a second server 310 which hosts a cyber-attack detection system 316 and the trained machine learning model 320 used by the cyber-attack detection system. The system may also comprise additional servers hosting other cloud applications. The system further comprises a plurality of client devices 322.

The server 302 which hosts the cloud application 304 and hence may be referred to as a 'cloud server'. As described above, the term "cloud application' is used herein to refer to any kind of application that runs on a remote server (i.e. remote from the client device 322) and in some examples, the cloud application comprises a data storage program, document editing program, video streaming service, authentication services, exchange and mail services, etc. The server 302 that hosts the cloud application comprises one or more processor(s) 306 which are configured to perform operations associated with the cloud application. The server 302 also comprises a memory 308 which may store data and executable instructions associated with the cloud application.

An event logger 318 which records events taking place on the cloud application 304 is illustrated as being situated in a separate server 310 in FIG. 3. The event logger 318 records the events in a series of logs, e.g. one log per event. The log of an event records a plurality of values of attributes associated with the event. As described above, a list of exemplary attributes includes but is not limited to: a user ID, an organization ID, the time of the event, the activity type, the IP address and an ISP.

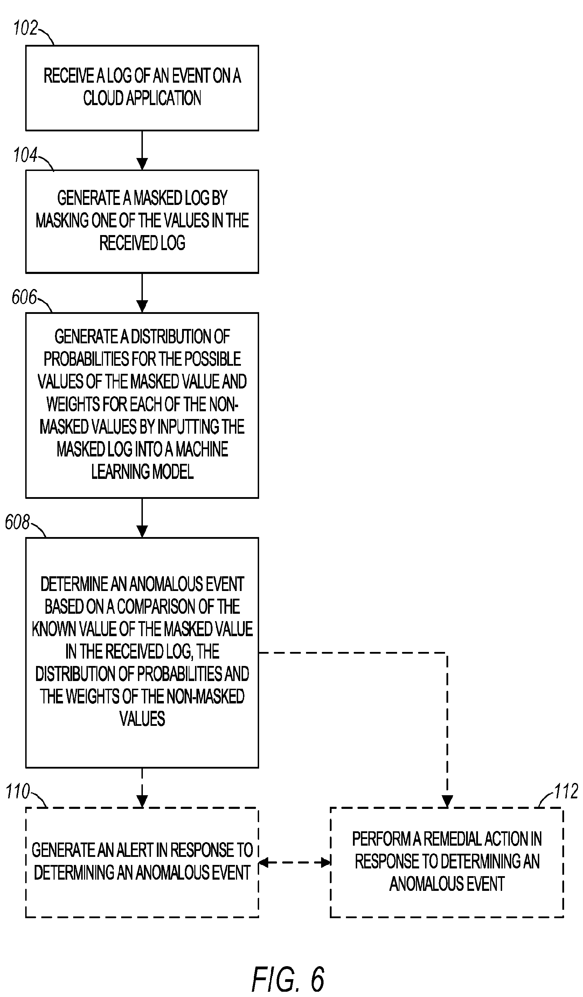

The server 310 that hosts the cyber-attack detection system 316 comprises one or more processor(s) 312 which are configured to perform operations associated with the cyber-attack detection system. The server 310 also comprises a memory 314 which may store data and executable instructions associated with the cyber-attack detection system. The cyber-attack detection system 316 is configured to perform the detection of an anomalous event, as described herein (e.g. with reference to FIGs. 1 and 6). For example, it is configured to receive a log of an event on the cloud application 304, wherein the log comprises a plurality of values of different attributes; generate a masked log by masking one of the values in the received log; generate a distribution of probabilities for the possible values of the masked value by inputting the masked log into a trained machine learning model 320 based on a plurality of masked logs of events; and determining an anomalous event based on a comparison of the known value of the masked value in the received log and the distribution of probabilities.

The cyber-attack detection system 316 utilizes the processor(s) 312 situated on the server 310 to perform operations. The processor(s) 312 may also be configured to perform the training of a machine learning model 320 (as described above with reference to FIG. 2) or this may be performed separately (e.g. by another server) and then the trained machine learning model 320 may be uploaded to the server 310. The cloud server comprises a memory 314 which is arranged to store the trained machine learning model 320. Whilst FIG. 3 shows a single trained machine learning model 320, it will be appreciated that there may be more than one trained machine learning model 320, e.g. a trained machine learning model per tenant and/or a trained machine learning model 320 per attribute, where different machine learning models are trained using logs of events from different tenants and/or with different attributes that are masked (e.g. a first machine learning model trained with the a first attribute, such as the ISP, masked and a second machine learning model trained with the a second attribute, such as the user agent, masked).

The cloud application 304 is accessible by a client device 314 via a network connection wherein the actions performed by the client device 314 on the cloud application (e.g. by a user operating the client device or by software running autonomously on the client device) are recorded by the event logger 318 in logs of events.

In the example shown in FIG. 3, one server 302 hosts the cloud application 304 and a different server 310 hosts the machine learning model 312 and cyber-attack detection system 316. In other examples the cyber-attack detection system 316 (using methods of FIG. 1), the cloud application 304 may be hosted on a single server.

Although FIG. 3 shows a single cloud application 304, it will be appreciated that the system may comprise many cloud applications 304 which may run on the same server 302 or on different servers. The event logger which is separate from the cloud application(s) may monitor events associated with more than one cloud application hosted on one or more servers. Whilst the event logger is shown in FIG. 3 as running on the same server as the cyber-attack detection system, in other examples it may be located on a server separate from both the cloud applications and the cyber-attack detection system, but may monitor the activity on the cloud applications and provide event logs to the cyber-attack detection system.

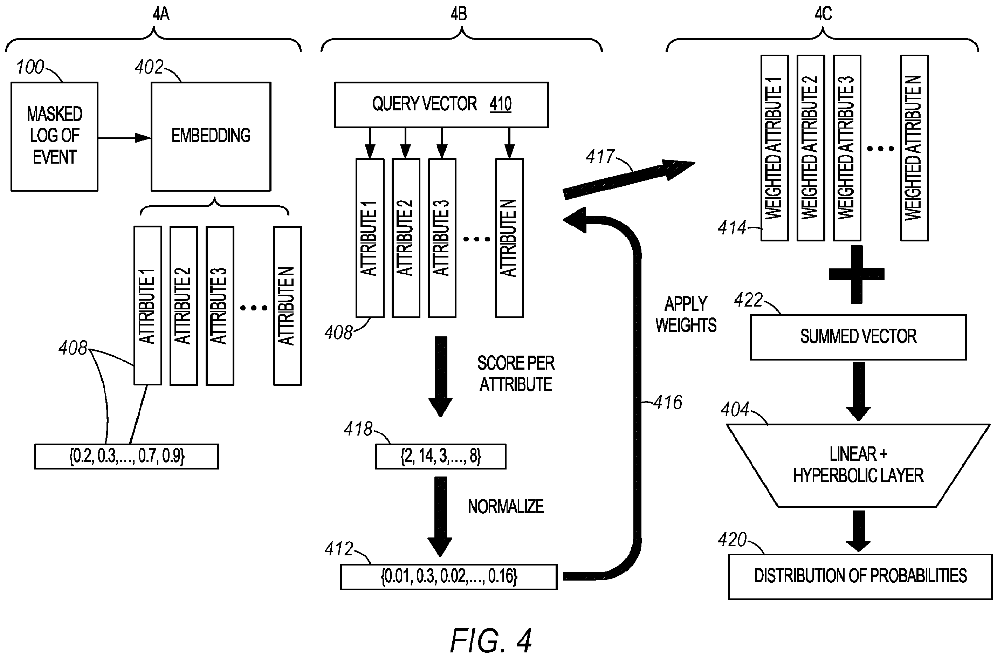

FIG. 4 shows a schematic diagram of a machine learning model (such as the machine learning model 312 in FIG. 3) which may be used in the method of FIG. 1 and trained using the method of FIG. 2. For purposes of explanation, the model is shown and described in three parts, labelled 4A, 4B and 4C. The model (e.g. a neural network) comprises an embeddings layer 402 (which is the first hidden layer in the model) and two linear layers with a hyperbolic tangent (tanh) activation function between them 404. In other example embodiments other activation functions and/or hyper parameters may be used.

As shown in part 4A, the masked log of an event 406 is input to the model (e.g. to an input layer of the model not shown in FIG. 4). The embeddings layer 402 generates a plurality of attribute vectors 408, one for each of the attributes, wherein the masked attribute vector is void/null (e.g. it may comprise only zeros). In the example shown, each attribute vector comprises the same number of elements, e.g. 100 elements.

As shown in part 4B, a query vector 410 is used to compute weights 412 for the attribute vectors 408 and then these weights 412 are applied to each of the attribute vectors 408 to generate weighted attribute vectors 414, as indicated by arrows 416 and 417. As shown in part 4B, the weights are generated by calculating a score per attribute 418 and then normalizing these scores. The score per attribute comprises a scalar product of the query vector 410 and the attribute vector 408 associated with the attribute. The weight applied to an attribute to generate the weighted attribute 414 therefore corresponds to the normalized score and indicates the influence of the particular attribute in generating the distribution of probabilities 420 and hence its influence on the determination of whether an event is considered anomalous or not. Referring to the example shown in FIG. 4, the second attribute is 30% responsible for the generation of the distribution of probabilities 420.

The query vector 410 that is used to compute the weights 412 may be trained as part of the machine learning (in FIG. 2), e.g., along with the weights 412 associated with the embeddings and linear network layers 402, 404, and/or may be specified by the operator of the cyber-attack detection system or the tenant organization. The query vector 410 may be randomly initialized and subsequently trained.

As shown in part 4C, the weighted attribute vectors 414 are summed to generate a summed vector 422 and this summed vector 422 is input to the first of the linear layers of the pair of linear layers 404. As described above, the output of the model is the distribution of probabilities 420 which defines a probability of each of the candidate values of the masked value occurring in the original log of the event which was used to generate the masked log of the event 406.

As described above, the distribution of probabilities 420 over the candidate values of the masked value is used in the training stage in conjunction with the known value of the masked attribute, as shown in FIG. 2, to compute a suitable loss function (e.g. a cross-entropy loss corresponding to the probability, in the distribution 420, of the occurrence of the known value) for refining the model (e.g. to update the coefficients used in the, embeddings layer, linear layers 404, and/or query vector 410) using back propagation. The distribution of probabilities 420 is used in the inference stage, as shown in FIG. 1, to determine whether the event that corresponds to the masked log is an anomalous event.

As described above, the machine learning model may be trained using masked logs of events 406 in which values corresponding to the same attribute is masked in each log, e.g. the value that identifies the ISP is always masked. Such a machine learning model can only be used in the inference stage (i.e. in the method of FIG. 1) if the value corresponding to the same attribute is masked in the log of the event (in block 104). In other examples, the machine learning model may be trained using masked logs of events 406 in which values of different attributes are masked in different masked logs and in which case the values of any of the attributes that have been masked in the training data when the machine learning model is trained may be masked in the inference stage.

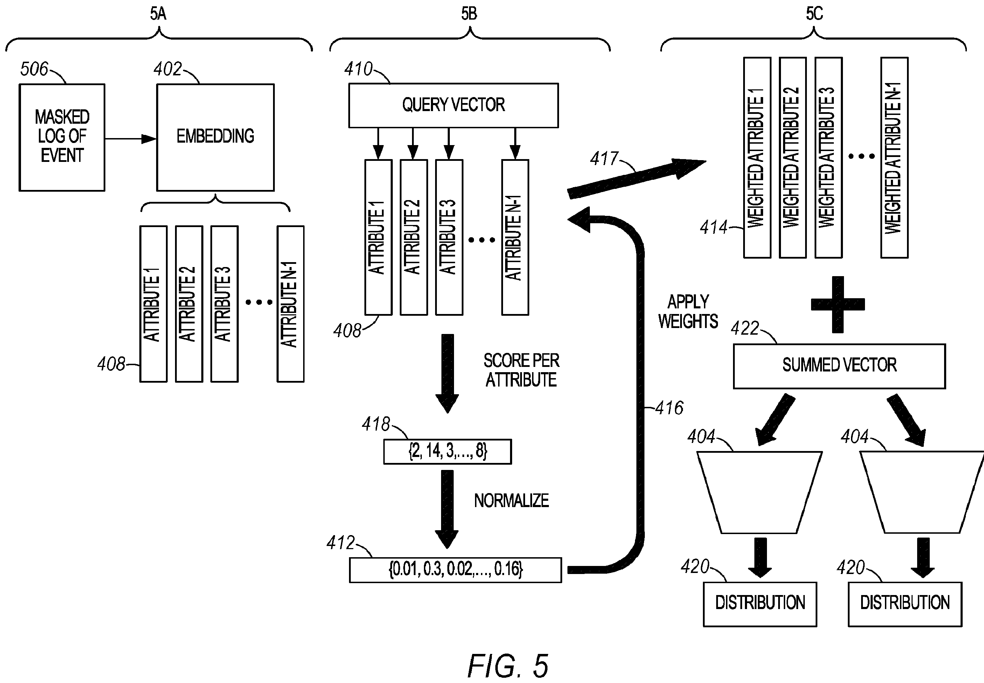

In the examples described above, a single value corresponding to a single attribute is masked in each masked log both in the training stage (of FIG. 2) and the inference stage (of FIG. 1). In other examples, the machine learning model shown in FIG. 4 may be extended as shown in FIG. 5 so that values corresponding to more than one attribute are masked in the masked log in the training stage (of FIG. 2) and the inference stage (of FIG. 1) and a distribution of probabilities is generated for each masked value. In the example shown in FIG. 5 the model is configured to generate two distributions of probabilities in parallel and these may be concatenated (as shown in FIG. 5); however, this may be extended to more than two masked attributes and more than two distributions of probabilities. As shown in FIG. 5, in part 5C, there are separate pairs of linear layers (with the hyperbolic tangent activation function between each pair) 404 for each of the first masked value and the second masked value and two distributions of probabilities 420, one for each of the first and second masked values are generated. As shown in FIG. 5, parts 5A and 5B remain as described above with reference to parts 4A and 4B of FIG. 4. In particular, the embeddings layer 402 remains as described above, except that two values are masked, wherein the masked attribute vectors are void/null (e.g. comprise only zeros). Similarly, the query vector 410 remains as described above.

In a further variation of that described above with reference to FIG. 5, the input masked log of the event may have the form of a matrix rather than a vector, with each row corresponding to the same log of the event but having a different masked value (i.e. the value of a different attribute is masked in each row).

In the examples described above, the machine learning model outputs a distribution of probabilities for candidate values of the masked value. In various examples, the machine learning model may additionally output, at least in the inference stage, the weights 412 that were used in generating the distribution of probabilities. As described above, these weights 412 indicate the influence of the value of a particular attribute in generating the distribution of probabilities. Where these weights 412 are output by the machine learning model, they may be used to further refine the determination of whether an anomalous event has occurred or not, as shown in FIG. 6.

FIG. 6 is a flow diagram of another method of detecting cyber-attacks on cloud applications and is a variation of the method described above with reference to FIG. 1. The machine learning model used in the method of FIG. 6 may be trained as described above (e.g. with reference to FIG. 2) and may be as shown in FIG. 4 or 5. As shown in FIG. 6, the method starts as described above with reference to FIG. 1; however, in block 606 a distribution of probabilities for the candidate values of the masked value and the weights for each of the non-masked values (corresponding to non-masked attributes) are generated by inputting the masked log into a trained machine learning model. It will be appreciated that the weights for each of the non-masked values are still generated in the method of FIG. 1; however, they remain within the machine learning model, e.g. as hidden variables.

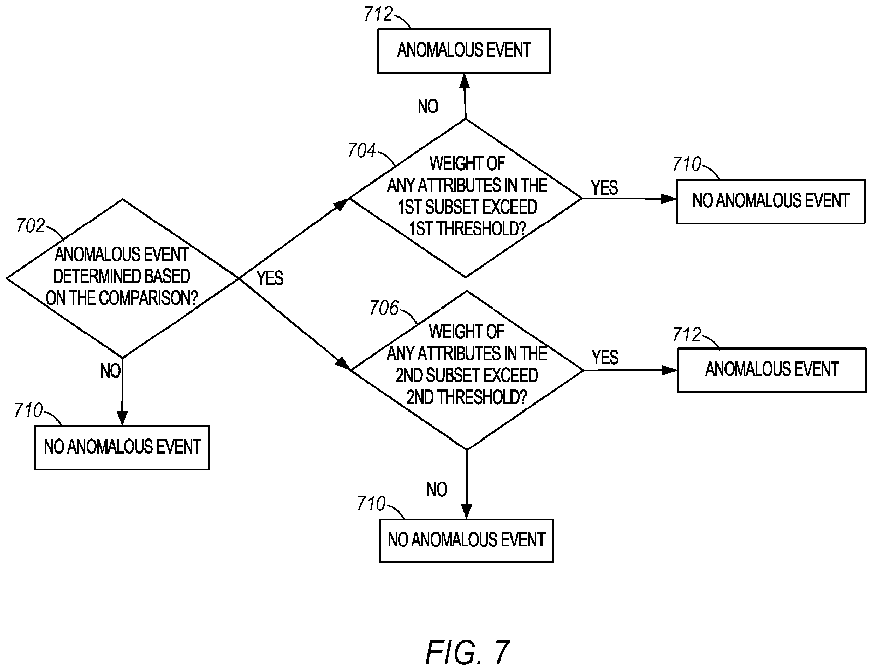

In block 608, a determination is made an anomalous event has occurred based on a comparison of a known value of the masked value in the received log and the distribution of probabilities and based on the weights of the non-masked attributes (e.g. weights 412). The comparison is performed in the same way as described above with reference to block 108, but there is an additional filtering operation (as part of block 608) based on the weights and one or more configuration parameters which may be configurable by the operator of the cyber-attack detection system and/or by the tenant organization. The configuration parameters identify a first subset of attributes for which anomalous events should be disregarded (e.g. reflecting the notion that anomaly determinations based largely on those attributes are likely false positives) and/or a second subset of attributes for which anomalous events should be identified (e.g. reflecting the notion that anomaly determinations based largely on those attributes are likely true positives). The filtering operation in block 608 uses the values of the weights for the attributes in the first and/or second subsets to determine whether an event that is determined as anomalous based on the comparison should be disregarded or not. An example of this filtering operation is shown in FIG. 7.

As shown in FIG. 7, if an anomalous event is identified based on the comparison ('Yes' in block 702), there is a filter that is applied based on the weights and the first and/or second subsets of attributes. If the weight of any of the attributes in the first subset exceed a first threshold ('Yes' in block 704), then the anomalous event is ignored in block 710. If the weights assigned to attributes in the second subset exceed a second threshold ('Yes' in block 706), then the anomalous event is determined in block 712 but otherwise ('No' in block 706) it is disregarded in block 710.

The example shown in FIG. 7 assumes that there is either a first or a second subset defined but in other examples, both may be defined and in which case the two filtering operations in blocks 704 and 704 may be performed in series and in either order. The first and second thresholds (used in blocks 704 and 706) may be defined by the same entity that defines the first and second subsets of attributes and may be fixed or may vary over time.

The use of the filtering based on weights, as described above with reference to FIGs. 6 and 7, increases the flexibility and configurability of the cyber-attack detection method and system, e.g. to enable it to adapt to changes in circumstances associated with activities taking place on the cloud application. For example, the filtering may be used to remove false positives that would otherwise occur when a tenant makes a change to operating systems or parameters such as when a tenant switches ISP or performs a system upgrade (e.g. that would result in different user agents being used by all users of the tenant).

Although the method of detecting malicious activity is described as being on cloud applications (e.g. where the events relate to cloud applications, such as user interactions with a cloud application), it will be appreciated that the method may also be applied to detecting malicious activity on an operating system (OS) and/or an on-premises application (i.e. non-cloud application) based on logs generated from interactions with the OS and/or on-premise application.

The methods described herein may be implemented on a computing-based device, such as server 310 shown in FIG. 3 or a server 302 which also runs the cloud application 304. The computing-based device, such as server 302 or 310, comprises one or more processors 306, 312 which are microprocessors, controllers or any other suitable type of processors for processing computer executable instructions to control the operation of the device in order to perform the cyber-attack detection methods described herein and/or to perform the training of the machine learning model, as described herein. Alternatively, or in addition, the functionality described herein is performed, at least in part, by one or more hardware logic components. For example, and without limitation, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs).

Platform software comprising an operating system or any other suitable platform software may be provided at the computing-based device to enable application software, such as the cloud application 304 and/or event logger 306 to be executed on the device.

The computer executable instructions are provided using any computer-readable media that is accessible by the computing-based device. Computer-readable media includes, for example, computer storage media such as memory 308, 314 and communications media. Computer storage media, such as memory 308, 314, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 308, 314) is shown within the computing-based device it will be appreciated that the storage is, in some examples, distributed or located remotely and accessed via a network or other communication link.

The computing-based device may also comprise an input/output controller 330 arranged to output display information to a display device which may be separate from or integral to the computing-based device. The display information may provide a graphical user interface. The input/output controller may also be arranged to receive and process input from one or more devices, such as a user input device (e.g. a mouse, keyboard, camera, microphone or other sensor). In some examples the user input device detects voice input, user gestures or other user actions and provides a natural user interface (NUI). This user input may be used to provide the configuration information used in the methods of FIGs. 1, 6 or 7, such as providing one or more of the thresholds for use in the comparisons (in blocks 108, 608, 704 and 706) and/or the configuration parameters used in the filtering (in blocks 704 and 704). In an embodiment the display device may also act as the user input device if it is a touch sensitive display device. The input/output controller outputs data to devices other than the display device in some examples, e.g. a locally connected printing device.

Any of the input/output controller 330, display device and the user input device may comprise NUI technology which enables a user to interact with the computing-based device in a natural manner, free from artificial constraints imposed by input devices such as mice, keyboards, remote controls and the like. Examples of NUI technology that are provided in some examples include but are not limited to those relying on voice and/or speech recognition, touch and/or stylus recognition (touch sensitive displays), gesture recognition both on screen and adjacent to the screen, air gestures, head and eye tracking, voice and speech, vision, touch, gestures, and machine intelligence. Other examples of NUI technology that are used in some examples include intention and goal understanding systems, motion gesture detection systems using depth cameras (such as stereoscopic camera systems, infrared camera systems, red green blue (RGB) camera systems and combinations of these), motion gesture detection using accelerometers / gyroscopes, facial recognition, three dimensional (3D) displays, head, eye and gaze tracking, immersive augmented reality and virtual reality systems and technologies for sensing brain activity using electric field sensing electrodes (electro encephalogram (EEG) and related methods).

Further examples are set out below and these examples may include any combination of the following features.

A first further example provides a method of detecting anomalous events indicative of malicious activity, the method comprising: receiving a log of an event comprising a plurality of values, the plurality of values comprising known values corresponding to each of a plurality of attributes of the event; generating a masked log by masking a value in the received log, the masked value corresponding to one of the attributes; based on the masked log and a trained machine learning model, generating a distribution of probabilities for possible values of the masked value, wherein the trained machine learning model is based on a plurality of masked logs of events; and determining that the event is an anomalous event based on a comparison of the known value of the masked value and the distribution of probabilities.

The malicious activity may be malicious activity on a cloud application.

A second further example provides a computer implemented comprising: receiving a log of an event comprising a plurality of values, the plurality of values comprising known values corresponding to each of a plurality of attributes of the event; generating a masked log by masking a value in the received log, the masked value corresponding to one of the attributes; based on the masked log and a trained machine learning model, generating a distribution of probabilities for possible values of the masked value, wherein the trained machine learning model is based on a plurality of masked logs of events; and determining that the event is an anomalous event based on a comparison of the known value of the masked value and the distribution of probabilities.

In the first or second further example, the log of an event may be a log of an event on a cloud application. In addition, or instead, the log may be a log of an event on an operating system or on-premise application (i.e. a log of an interaction with an operating system or on-premise application).

A third further example provides a method of detecting malicious activity on cloud applications, the method comprising: receiving a log of an event on a cloud application, wherein the log comprises known values corresponding to a plurality of attributes of the event; generating a masked log by masking one of the values in the received log; inputting the masked log into a machine learning model to generate a distribution of probabilities for the possible values of the masked value, wherein the machine learning model has been trained using a plurality of masked logs of events; and determining the event is an anomalous event based on a comparison of the known value of the masked value in the received log and the distribution of probabilities.

A fourth further example provides a method of detecting malicious activity on cloud applications, the method comprising: receiving a log of an event on a cloud application, wherein the log comprises a plurality of known values corresponding to different attributes of the event; generating a masked log by masking one of the values in the received log; generating a distribution of probabilities for the possible values of the masked value by inputting the masked log into a trained machine learning model based on a plurality of masked logs of events; and determining that the event is an anomalous event based on a comparison of the known value of the masked value in the received log and the distribution of probabilities.

In any of the first, second, third or fourth further examples, the trained machine learning model may be trained using a plurality of masked logs of events.

The method of the first, second, third or fourth further examples, may further comprise training the trained machine learning model, wherein training of the trained machine learning model comprises: generating the plurality of masked logs of events from a plurality of logs of events by masking a value in each log, the values masked in at least a subset of the plurality of masked logs corresponding to said one of the attributes; generating, for each of the masked logs, a distribution of probabilities for possible values of the masked value by inputting the plurality of masked logs of events into a machine learning model; and updating the machine learning model based on the distributions of probabilities and corresponding known values of the masked values from the plurality of logs.

Updating the machine learning model based on the distributions of probabilities and corresponding known values of the masked values from the plurality of logs may comprise using, for each of the plurality of logs, a probability of the known value of the masked value from the distribution of probabilities as a cross-entropy loss.

The machine learning model may be trained for multiple attributes of the plurality of attributes, the value masked in the received log corresponding to one of the multiple attributes, the training comprising: generating the plurality of masked logs of events from a plurality of logs of events by masking a value corresponding to an attribute of the multiple attributes in each of the plurality of logs; inputting the plurality of masked logs of events into the machine learning model to generate, for each of the masked logs, a distribution of probabilities for possible values of the masked value; and updating the machine learning model based on the distributions of probabilities and corresponding known values of the masked value from the plurality of logs.

Generating the plurality of masked logs of events from a plurality of logs of events by masking the value corresponding to an attribute in each log may comprise, for each log in the plurality of logs of events: randomly selecting an value in the log; and generating a masked log by masking the selected value.

The value masked in the received log may correspond to a same attribute as the values masked in each log of the plurality of logs.

The attribute corresponding to the masked value may be the internet service provider, ISP, of the event.

The comparison may comprise determining a probability, in the distribution of probabilities, of the known value of the masked value and wherein the machine learning model additionally outputs data identifying one or more attributes corresponding to one or more values in the masked log that contributed to the determination of the probability, in the distribution of probabilities, of the known value of the masked value.

The methods described above may further comprise: disregarding any anomalous events determined based on contributions from values corresponding to one or more predefined attributes.

The machine learning model may comprise two linear layers with a hyperbolic tangent activation function between them.

The machine learning model may further comprise an embeddings layer as a first hidden layer of the model.

The embeddings layer may output a plurality of attribute vectors and the model may be further arranged to use a query vector to compute weights for the attribute vectors and apply the weights in a weighted sum of the attribute vectors that flows as input into a first of the linear layers.

The methods described above may further comprise identifying, based on the weights, one or more values in the masked log that contributed to the determination.

Determining that an anomalous event has occurred may comprise comparing a probability, from the distribution of probabilities, for the known value of the masked value and a threshold.

The methods described above may further comprise periodically updating the threshold based on a number of detected anomalous events in a preceding time period.

The model may be updated periodically based on an updated plurality of masked logs of events, the updated plurality of masked logs of events being generated from a plurality of logs of events occurring since a previous update.

The methods described above may further comprise, in response to determining that an anomalous event has occurred, generating an alert.

The methods described above may further comprise, in response to determining that the event is an anomalous event, automatically performing a remedial action. The remedial action may comprise blocking a user identified in the received log of the event.

The plurality of attributes of an event may comprise at least one or more of: user ID, organization ID, time of event, duration of event, activity type, internet service provider.

A fifth further example provides a method of training a machine learning model to detect anomalous events indicative of malicious activity, the method comprising: receiving a plurality of logs of events, each log of an event comprising a plurality of values, the plurality of values comprising known values corresponding to each of a plurality of attributes of the event; generating a plurality of masked logs of events from the plurality of logs of events by masking a value in each log; generating, for each of the masked logs, a distribution of probabilities for possible values of the masked value by inputting the plurality of masked logs of events into the machine learning model; and updating the machine learning model based on the distributions of probabilities and corresponding known values of the masked values from the plurality of logs.

A sixth further example provides a computer implemented method comprising: receiving a plurality of logs of events, each log of an event comprising a plurality of values, the plurality of values comprising known values corresponding to each of a plurality of attributes of the event; generating a plurality of masked logs of events from the plurality of logs of events by masking a value in each log; generating, for each of the masked logs, a distribution of probabilities for possible values of the masked value by inputting the plurality of masked logs of events into the machine learning model; and updating the machine learning model based on the distributions of probabilities and corresponding known values of the masked values from the plurality of logs.

A seventh further example provides a method of training a machine learning model to detect malicious activity on cloud applications, the method comprising: receiving a plurality of logs of events; generating the plurality of masked logs of events from the plurality of logs of events by masking an attribute in each log; generating, for each of the masked logs, a distribution of probabilities for possible values of the masked attribute by inputting the plurality of masked logs of events into the machine learning model; and updating the machine learning model based on the distribution of probabilities and a known value of the masked attribute from the log value.

A eighth further example provides a system comprising: one or more hardware processors; and machine-readable medium storing instructions that, when executed by the one or more hardware processors, cause the one or more hardware processors to perform operations according to any of the methods described herein.

A ninth further example provides a (non-transitory) computer-readable medium storing instructions which, when executed by one or more hardware processors, cause the one or more hardware processors to perform operations according to any of the methods described herein.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

The term 'subset' is used herein to refer to a proper subset such that a subset of a set does not comprise all the elements of the set (i.e. at least one of the elements of the set is missing from the subset). The term 'subset' does not encompass the null set.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification. The invention is defined by the appended claims.

## Claims

1. A method of detecting anomalous events indicative of malicious activity, the method comprising:
receiving a log of an event, the event having a plurality of attributes and the log comprising a known value for each of the plurality of attributes of the event (102);
generating a masked log by masking one of the known values of the attributes in the received log (104);
based on the masked log and a trained machine learning model, generating a distribution of probabilities for possible values of the masked known value, wherein the trained machine learning model is based on a plurality of other masked logs of events (106, 606); and
determining that the event is an anomalous event by comparing a probability, from the distribution of probabilities, for the known value of the masked known value to a threshold.

2. The method of claim 1, further comprising, in response to determining that the event is an anomalous event:
generating an alert (110); and/or
automatically performing a remedial action (112).

3. The method of claim 1 or 2, further comprising training the trained machine learning model, wherein training of the trained machine learning model comprises:
generating the plurality of other masked logs of events from a plurality of logs of other events by masking a value in each log (202), the values masked in at least a subset of the plurality of other masked logs corresponding to said one of the attributes;
generating, for each of the other masked logs, a distribution of probabilities for possible values of the masked value by inputting the plurality of other masked logs of events into a machine learning model (204); and
updating the machine learning model based on the distributions of probabilities and corresponding known values of the masked values from the plurality of logs of other events (206).

4. The method of claim 3, wherein updating the machine learning model based on the distributions of probabilities and corresponding known values of the masked values from the plurality of logs of other events comprises using, for each of the plurality of logs of other events, a probability of the known value of the masked value from the distribution of probabilities as a cross-entropy loss.

5. The method of claim 3 or 4, wherein generating the plurality of other masked logs of events from a plurality of logs of other events by masking a value in each log comprises, for each log in the plurality of logs of events:
randomly selecting a value in the log; and
generating a masked log by masking the selected value.

6. The method of any of claims 1-4, wherein the value masked in the received log and the values masked in each log of the plurality of other masked logs all correspond to a same attribute of the event.

7. The method of any of claims 1-4 and 6, wherein the attribute corresponding to the masked value is the internet service provider, ISP, of the event.

8. The method of any of the preceding claims, wherein the comparison of the known value of the masked known value and the distribution of probabilities comprises determining a probability, in the distribution of probabilities, of the known value of the masked known value and wherein the machine learning model additionally outputs data identifying one or more attributes corresponding to one or more values in the masked log that contributed to the determination of the probability, in the distribution of probabilities, of the known value of the masked known value.

9. The method of claim 8, wherein the method further comprises:
disregarding any anomalous events determined based on contributions from values corresponding to one or more predefined attributes.

10. The method of any of the preceding claims, wherein the machine learning model comprises two linear layers with a hyperbolic tangent activation function between them and an embeddings layer as a first hidden layer of the model.

11. The method of claim 10, wherein the embeddings layer outputs a plurality of attribute vectors and the model is further arranged to use a query vector to compute weights for the attribute vectors and apply the weights in a weighted sum of the attribute vectors that flows as input into a first of the linear layers.

12. The method of claim 10, further comprising identifying, based on the weights, one or more values in the masked log that contributed to the determination.

13. The method according to claim 1, further comprising periodically updating the threshold based on a number of detected anomalous events in a preceding time period.

14. A computer-readable storage medium comprising instructions, which when executed by a computer, cause the computer to carry out the method of any of claims 1 to 13.

15. A system comprising a server (310) hosting a cyber-attack detection system (316), the server (310) comprising:
one or more processors (312);
a memory (314) storing executable instructions associated with the cyber-attack detection system (316) which, when executed by the one or more processor (312), cause the server to:
receive a log of an event, the event having a plurality of attributes and the log comprising a known value for each of the plurality of attributes of the event (102);
generate a masked log by masking one of the known values of the attributes in the received log (104);
based on the masked log and a trained machine learning model, generate a distribution of probabilities for possible values of the masked known value, wherein the trained machine learning model is based on a plurality of other masked logs of events (106, 606); and
determine that the event is an anomalous event by comparing a probability, from the distribution of probabilities, for the known value of the masked known value to a threshold.

## Patentansprüche

1. Verfahren zum Erkennen anomaler Ereignisse, die auf bösartige Aktivität hinweisen, wobei das Verfahren umfasst:
Empfangen eines Protokolls eines Ereignisses, wobei das Ereignis eine Mehrzahl von Attributen aufweist und das Protokoll für jedes der Mehrzahl von Attributen des Ereignisses (102) einen bekannten Wert umfasst;
Erzeugen eines maskierten Protokolls durch Maskieren eines der bekannten Werte der Attribute im empfangenen Protokoll (104);
auf Grundlage des maskierten Protokolls und eines trainierten Modells maschinellen Lernens Erstellen einer Wahrscheinlichkeitsverteilung für mögliche Werte des maskierten bekannten Werts, wobei das trainierte Modell maschinellen Lernens auf einer Mehrzahl anderer maskierter Protokolle von Ereignissen (106, 606) basiert; und
Bestimmen, dass das Ereignis ein anomales Ereignis ist, indem eine Wahrscheinlichkeit für den bekannten Wert des maskierten bekannten Werts aus der Wahrscheinlichkeitsverteilung mit einem Schwellenwert verglichen wird.

2. Verfahren nach Anspruch 1, das ferner als Reaktion auf das Bestimmen, dass das Ereignis ein anomales Ereignis ist, umfasst:
Erzeugen einer Warnung (110); und/oder
automatisches Durchführen einer Behebungsaktion (112).

3. Verfahren nach Anspruch 1 oder 2, das ferner das Trainieren des trainierten Modells maschinellen Lernens umfasst, wobei das Trainieren des trainierten Modells maschinellen Lernens umfasst:
Erzeugen der Mehrzahl anderer maskierter Protokolle von Ereignissen aus einer Mehrzahl von Protokollen anderer Ereignisse, indem in jedem Protokoll (202) ein Wert maskiert wird, wobei die in mindestens einer Teilmenge der Mehrzahl anderer maskierter Protokolle maskierten Werte dem einen der Attribute entsprechen;
für jedes der anderen maskierten Protokolle Erzeugen einer Wahrscheinlichkeitsverteilung für mögliche Werte des maskierten Werts, indem die Mehrzahl anderer maskierter Protokolle von Ereignissen in ein Modell (204) maschinellen Lernens eingegeben wird; und
Aktualisieren des Modells maschinellen Lernens auf Grundlage der Wahrscheinlichkeitsverteilungen und der entsprechenden bekannten Werte der maskierten Werte aus der Mehrzahl von Protokollen anderer Ereignisse (206).

4. Verfahren nach Anspruch 3, wobei das Aktualisieren des Modells maschinellen Lernens auf Grundlage der Wahrscheinlichkeitsverteilungen und der entsprechenden bekannten Werte der maskierten Werte aus der Mehrzahl von Protokollen anderer Ereignisse umfasst, dass für jedes der Mehrzahl von Protokollen anderer Ereignisse eine Wahrscheinlichkeit des bekannten Werts des maskierten Werts aus der Wahrscheinlichkeitsverteilung als Kreuzentropie-Verlust verwendet wird.

5. Verfahren nach Anspruch 3 oder 4, wobei das Erzeugen der Mehrzahl anderer maskierter Protokolle von Ereignissen aus einer Mehrzahl von Protokollen anderer Ereignisse durch Maskieren eines Werts in jedem Protokoll für jedes Protokoll in der Mehrzahl von Protokollen von Ereignissen umfasst:
willkürliches Auswählen eines Werts in dem Protokoll; und
Erzeugen eines maskierten Protokolls durch Maskieren des ausgewählten Werts.

6. Verfahren nach einem der Ansprüche 1 bis 4, wobei der im empfangenen Protokoll maskierte Wert und die in jedem Protokoll der Mehrzahl anderer maskierter Protokolle maskierten Werte alle einem gleichen Attribut des Ereignisses entsprechen.

7. Verfahren nach einem der Ansprüche 1 bis 4 und 6, wobei das Attribut, das dem maskierten Wert entspricht, der Internetdienstanbieter, ISP, des Ereignisses ist.

8. Verfahren nach einem der vorangehenden Ansprüche, wobei der Vergleich des bekannten Werts des maskierten bekannten Werts mit der Wahrscheinlichkeitsverteilung das Bestimmen einer Wahrscheinlichkeit des bekannten Werts des maskierten bekannten Werts in der Wahrscheinlichkeitsverteilung umfasst, und wobei das Modell maschinellen Lernens zusätzlich Daten ausgibt, die ein oder mehrere Attribute identifizieren, die einem oder mehreren Werten im maskierten Protokoll entsprechen, die zur Bestimmung der Wahrscheinlichkeit des bekannten Werts des maskierten bekannten Werts in der Wahrscheinlichkeitsverteilung beigetragen haben.

9. Verfahren nach Anspruch 8, wobei das Verfahren ferner umfasst:
Ignorieren aller anomalen Ereignisse, die auf Grundlage von Beiträgen von Werten bestimmt wurden, die einem oder mehreren vordefinierten Attributen entsprechen.

10. Verfahren nach einem der vorangehenden Ansprüche, wobei das Modell maschinellen Lernens zwei lineare Schichten mit einer Tangens-hyperbolicus-Aktivierungsfunktion dazwischen und eine Einbettungsschicht als erste verborgene Schicht des Modells umfasst.

11. Verfahren nach Anspruch 10, wobei die Einbettungsschicht eine Mehrzahl von Attributvektoren ausgibt und das Modell ferner dazu eingerichtet ist, einen Abfragevektor zu verwenden, um Gewichte für die Attributvektoren zu berechnen und die Gewichte in einer gewichteten Summe der Attributvektoren anzuwenden, die als Eingabe in eine erste der linearen Schichten fließt.

12. Verfahren nach Anspruch 10, das ferner das Identifizieren eines oder mehrerer Werte im maskierten Protokoll, die zur Bestimmung beigetragen haben, auf Grundlage der Gewichte umfasst.

13. Verfahren nach Anspruch 1, das ferner das periodische Aktualisieren des Schwellenwerts auf Grundlage einer Anzahl von in einem vorhergehenden Zeitraum erkannten anomalen Ereignissen umfasst.

14. Computerlesbares Speichermedium, das Anweisungen umfasst, die, wenn sie durch einen Computer ausgeführt werden, den Computer dazu veranlassen, das Verfahren nach einem der Ansprüche 1 bis 13 auszuführen.

15. System, das einen Server (310) umfasst, der ein System (316) zur Erkennung von Cyberangriffen hostet, wobei der Server (310) umfasst:
einen oder mehrere Prozessoren (312);
einen Speicher (314), auf dem ausführbare Anweisungen gespeichert sind, die mit dem System (316) zur Erkennung von Cyberangriffen verknüpft sind, die, wenn sie von dem einen oder den mehreren Prozessoren (312) ausgeführt werden, den Server dazu veranlassen:
Empfangen eines Protokolls eines Ereignisses, wobei das Ereignis eine Mehrzahl von Attributen aufweist und das Protokoll für jedes der Mehrzahl von Attributen des Ereignisses (102) einen bekannten Wert umfasst;
Erzeugen eines maskierten Protokolls durch Maskieren eines der bekannten Werte der Attribute im empfangenen Protokoll (104);
auf Grundlage des maskierten Protokolls und eines trainierten Modells maschinellen Lernens Erstellen einer Wahrscheinlichkeitsverteilung für mögliche Werte des maskierten bekannten Werts, wobei das trainierte Modell maschinellen Lernens auf einer Mehrzahl anderer maskierter Protokolle von Ereignissen (106, 606) basiert; und
Bestimmen, dass das Ereignis ein anomales Ereignis ist, indem eine Wahrscheinlichkeit für den bekannten Wert des maskierten bekannten Werts aus der Wahrscheinlichkeitsverteilung mit einem Schwellenwert verglichen wird.

## Revendications

1. Procédé de détection d'événements anormaux indicatifs d'une activité malveillante, le procédé comprenant :
la réception d'un journal d'un événement, l'événement ayant une pluralité d'attributs et le journal comprenant une valeur connue pour chacun de la pluralité d'attributs de l'événement (102) ;
la génération d'un journal masqué en masquant l'une des valeurs connues des attributs dans le journal reçu (104) ;
sur la base du journal masqué et d'un modèle d'apprentissage automatique entraîné, la génération d'une distribution de probabilités pour des valeurs possibles de la valeur connue masquée, dans lequel le modèle d'apprentissage automatique entraîné est sur la base d'une pluralité d'autres journaux d'événements masqués (106, 606) ; et
la détermination que l'événement est un événement anormal en comparant une probabilité, à partir de la distribution de probabilités, pour la valeur connue de la valeur connue masquée à un seuil.

2. Procédé selon la revendication 1, comprenant en outre, en réponse à la détermination que l'événement est un événement anormal :
la génération d'une alerte (110) ; et/ou
la réalisation automatique d'une action corrective (112).

3. Procédé selon la revendication 1 ou 2, comprenant en outre l'entraînement du modèle d'apprentissage automatique entraîné, dans lequel l'entraînement du modèle d'apprentissage automatique entraîné comprend :
la génération de la pluralité d'autres journaux d'événements masqués à partir d'une pluralité de journaux d'autres événements en masquant une valeur dans chaque journal (202), les valeurs masquées dans au moins un sous-ensemble de la pluralité d'autres journaux masqués correspondant à l'un des attributs ;
la génération, pour chacun des autres journaux masqués, d'une distribution de probabilités pour des valeurs possibles de la valeur masquée en entrant la pluralité d'autres journaux d'événements masqués dans un modèle d'apprentissage automatique (204) ; et
la mise à jour du modèle d'apprentissage automatique sur la base des distributions de probabilités et des valeurs connues correspondantes des valeurs masquées à partir de la pluralité de journaux d'autres événements (206).

4. Procédé selon la revendication 3, dans lequel la mise à jour du modèle d'apprentissage automatique sur la base des distributions de probabilités et des valeurs connues correspondantes des valeurs masquées à partir de la pluralité de journaux d'autres événements comprend l'utilisation, pour chacun de la pluralité de journaux d'autres événements, d'une probabilité de la valeur connue de la valeur masquée à partir de la distribution de probabilités comme perte d'entropie croisée.

5. Procédé selon la revendication 3 ou 4, dans lequel la génération de la pluralité d'autres journaux d'événements masqués à partir d'une pluralité de journaux d'autres événements en masquant une valeur dans chaque journal comprend, pour chaque journal dans la pluralité de journaux d'événements : la sélection aléatoire d'une valeur dans le journal ; et
la génération d'un journal masqué en masquant la valeur sélectionnée.

6. Procédé selon l'une quelconque des revendications 1 à 4, dans lequel la valeur masquée dans le journal reçu et les valeurs masquées dans chaque journal de la pluralité d'autres journaux masqués correspondent toutes à un même attribut de l'événement.

7. Procédé selon l'une quelconque des revendications 1 à 4 et 6, dans lequel l'attribut correspondant à la valeur masquée est le fournisseur d'accès Internet, FAI, de l'événement.

8. Procédé selon l'une quelconque des revendications précédentes, dans lequel la comparaison de la valeur connue de la valeur connue masquée et de la distribution de probabilités comprend la détermination d'une probabilité, dans la distribution de probabilités, de la valeur connue de la valeur connue masquée et dans lequel le modèle d'apprentissage automatique produit par ailleurs des données identifiant un ou plusieurs attributs correspondant à une ou plusieurs valeurs dans le journal masqué qui ont contribué à la détermination de la probabilité, dans la distribution de probabilités, de la valeur connue de la valeur connue masquée.

9. Procédé selon la revendication 8, dans lequel le procédé comprend en outre :
le fait d'ignorer tout événement anormal déterminé sur la base des contributions de valeurs correspondant à un ou plusieurs attributs prédéfinis.

10. Procédé selon l'une quelconque des revendications précédentes, dans lequel le modèle d'apprentissage automatique comprend deux couches linéaires avec une fonction d'activation tangente hyperbolique entre elles et une couche d'embeddings comme première couche cachée du modèle.

11. Procédé selon la revendication 10, dans lequel la couche d'embeddings produit une pluralité de vecteurs d'attributs et le modèle est en outre agencé pour utiliser un vecteur de requête pour calculer les poids des vecteurs d'attributs et appliquer les poids dans une somme pondérée des vecteurs d'attributs qui est transmise en entrée à une première des couches linéaires.

12. Procédé selon la revendication 10, comprenant en outre l'identification, sur la base des poids, d'une ou de plusieurs valeurs dans le journal masqué qui ont contribué à la détermination.

13. Procédé selon la revendication 1, comprenant en outre la mise à jour périodique du seuil sur la base d'un nombre d'événements anormaux détectés au cours d'une période de temps précédente.

14. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 13.

15. Système comprenant un serveur (310) hébergeant un système de détection de cyberattaques (316), le serveur (310) comprenant :
un ou plusieurs processeurs (312) ;
une mémoire (314) stockant des instructions exécutables associées au système de détection de cyberattaques (316) qui, lorsqu'elles sont exécutées par les un ou plusieurs processeurs (312), amènent le serveur à :
recevoir un journal d'un événement, l'événement ayant une pluralité d'attributs et le journal comprenant une valeur connue pour chacun de la pluralité d'attributs de l'événement (102) ;
générer un journal masqué en masquant l'une des valeurs connues des attributs dans le journal reçu (104) ;
sur la base du journal masqué et d'un modèle d'apprentissage automatique entraîné, générer une distribution de probabilités pour des valeurs possibles de la valeur connue masquée, dans lequel le modèle d'apprentissage automatique entraîné est sur la base d'une pluralité d'autres journaux d'événements masqués (106, 606) ; et
déterminer que l'événement est un événement anormal en comparant une probabilité, à partir de la distribution de probabilités, pour la valeur connue de la valeur connue masquée à un seuil.
